Europäisches Patentamt

European Patent Office

Office européen des brevets

(11) Veröffentlichungsnummer: **0 349 523**
**A2**

## (12) EUROPÄISCHE PATENTANMELDUNG

(21) Anmeldenummer: **89890173.1**

(22) Anmeldetag: **21.06.89**

(51) Int. Cl.⁵: **C 21 C 7/00**
**B 22 D 11/10**

(30) Priorität: **27.06.88 AT 1667/88**

(43) Veröffentlichungstag der Anmeldung:
**03.01.90 Patentblatt 90/01**

(84) Benannte Vertragsstaaten:
**AT BE CH DE ES FR GB GR IT LI LU NL SE**

(71) Anmelder: **VOEST-ALPINE STAHL DONAWITZ**
**GESELLSCHAFT M.B.H.**
**Pestalozzistrasse 128 Postfach 1**
**A-8700 Leoben-Donawitz (AT)**

(72) Erfinder: **Pochmarski, Luzian, Dipl.-Ing.**
**Roseggerstrasse 27**
**A-8700 Leoben (AT)**

**Köller, Otto, Dipl.-Ing.**
**Kerpelystrasse 83**
**A-8704 Leoben (AT)**

(74) Vertreter: **Haffner, Thomas M., Dr. et al**
**Patentanwaltskanzlei Dipl.-Ing. Adolf Kretschmer Dr.**
**Thomas M. Haffner Schottengasse 3a**
**A-1014 Wien (AT)**

(54) Vorrichtung zum Trennen von Schlacke und Stahl.

(57) Bei einer Vorrichtung zum Trennen von Schlacke und Stahl bei kontinuierlichen Metallschmelzverfahren ist zwischen einer Auffangpfanne (4) und der Abstichöffnung des Schmelzgefäßes (12) ein vom Schmelzgefäß gesonderter Separator (15) angeordnet, dessen Einlaufteil (2) an die Abstichöffnung des Schmelzgefäßes (12) angeschlossen, insbesondere unterhalb der Abstichöffnung angeordnet, ist, wobei der Einlaufteil (2) durch eine in den Separator (15) eintauchende Wand, insbesondere einen Fuchs (6) von einer Sammelkammer (5) für das Schmelzbad getrennt ist und einen Schlackenablauf (7) aufweist, und die Sammelkammer eine Abstichöffnung bzw. einen Abfluß (20) für das Schmelzbad aufweist und wenigstens ein Teil der Sammelkammer (5) mit Heizeinrichtungen (18) ausgestattet ist.

FIG. 1

EP 0 349 523 A2

## Beschreibung

### Vorrichtung zum Trennen von Schlacke und Stahl

Die Erfindung bezieht sich auf eine Vorrichtung zum Trennen von Schlacke und Stahl bei kontinuierlichen Metallschmelzverfahren.

Bei kontinuierlichen Metallschmelzverfahren, wie beispielsweise beim KVA-Verfahren, das mit der kontinuierlichen Zugabe von metallischen Fe-Trägern, wie z.B. Schrott, vorreduzierte Pellets oder Eisenschwamm von oben in den Schacht des KVA-Gefäßes arbeitet, und bei welchem kontinuierlich geschmolzenes Metall mit Schlacke abläuft, besteht das Problem, dieses gemeinsam ablaufende Metall/Schlackegemisch zu trennen und den nur gering über Liquidus aufgeheizten Stahl höher zu überhitzen.

Diese Problematik ist nicht nur auf den KVA-Prozeß beschränkt, sondern besteht auch bei anderen kontinuierlich arbeitenden Prozessen, bei denen Metall/Schlackegemische gemeinsam ablaufen.

Meist wird der ablaufende Metall/Schlackestrom in einer Pfanne aufgefangen, die während bzw. nach kompletter Füllung abgeschlackt wird. Durch das kontinuierliche Füllen des Auffanggefäßes wird dieses über seine ganze Höhe von aggressiver Schlacke, die ebenfalls in zunehmender Dicke mit aufsteigt, beansprucht, so daß hochwertige feuerfeste Zustellungen verwendet werden müssen, um eine betrieblich vertretbare Haltbarkeit der Auffangpfannen zu gewährleisten. Vor der sekundärmetallurgischen Weiterverarbeitung des Metalls ist eine sorgfältige Abschlackung, mit ihren Nachteilen, wie Zeit-, Temperatur-, und Abschlackeverlusten, nötig. Um Schalenbildungen in der Auffangpfanne während des Füllens, Abschlackens und der Wartezeit bis zur Weiterverarbeitung zu vermeiden, muß die Auffangpfanne auf hohe Temperaturen vorgeheizt werden.

Der abfließende Stahl, der nur eine geringe Überhitzung aufweist, muß durch Zugabe von Metallen, die mit dem FeO-Gehalt der Schlacke exotherme Reaktionen eingehen, erwärmt werden. Diese Stahlerwärmung, die über aufgeheizte Schlacken erfolgt, ist jedoch, da sie vorzugsweise durch Zugabe von FeSi oder Al erfolgt, kostenintensiv, wobei allerdings durch die teilweise Reduktion des FeO der Schlacke eine Ausbringensverbesserung erzielt werden kann.

Die Erfindung zielt nun darauf ab, eine Vorrichtung der eingangs genannten Art zu schaffen, bei welcher das Auffangen der Schmelze nach einem kontinuierlichen Metallschmelzverfahren, insbesondere einem KVA-Verfahren wirtschaftlicher und einfacher durchgeführt werden kann. Im besonderen zielt die Erfindung darauf ab, eine Überhitzung des Bades zu ermöglichen, ohne daß hiebei das Schmelzverfahren bei höheren Temperaturen betrieben werden muß und ohne daß durch diese Überhitzung des Bades eine übermäßige Erhitzung der Schlacke eintritt.

Zur Lösung dieser Aufgabe besteht die erfindungsgemäße Vorrichtung im wesentlichen darin, daß zwischen einer Auffangpfanne und der Abstichöffnung des Schmelzgefäßes ein vom Schmelzgefäß gesonderter Separator angeordnet ist, dessen Einlaufteil an die Abstichöffnung des Schmelzgefäßes angeschlossen, insbesondere unterhalb der Abstichöffnung angeordnet, ist, daß der Einlaufteil durch eine in den Separator eintauchende Wand, insbesondere einen Fuchs, von einer Sammelkammer für das Schmelzbad getrennt ist und einen Schlackenablauf aufweist, daß die Unterkante der Wand bzw. des Fuchses im Einlaufteil tiefer liegt als der Schlackenablauf am Einlaufteil, daß die Sammelkammer eine Abstichöffnung bzw. einen Abfluß für das Schmelzbad aufweist und daß wenigstens ein Teil der Sammelkammer mit Heizeinrichtungen ausgestattet ist. Dadurch, daß ein von Schmelzgefäß und Auffangpfanne gesonderter Separator vorgesehen wird, läßt sich ein Pufferraum schaffen, in welchem Bad und Schlacke während des Pfannenwechsels aufgefangen werden können, und dadurch, daß der Separator selbst einen Einlaufteil und eine vom Einlaufteil durch eine in den Separator eintauchende Wand, insbesondere einen Fuchs getrennte Sammelkammer aufweist, wird die Möglichkeit geschaffen, die Überhitzung des Bades in einer Weise vorzunehmen, daß eine übermäßige Erhitzung der Schlacke vermieden wird. Zu diesem Zweck wird erfindungsgemäß die Ausbildung so getroffen, daß wenigstens ein Teil der Sammelkammer mit Heizeinrichtungen ausgestattet ist, wobei dadurch, daß die in den Separator eintauchende Wand, insbesondere der Fuchs, mit seiner Unterkante tiefer liegt als der Schlackenablauf am Einlaufteil eine sichere Trennung von Schlacke und Bad erzielt wird. Mit den Heizeinrichtungen der Sammelkammer wird somit lediglich das Bad, nicht aber die Schlacke erhitzt, so daß hier mit geringstem Energieaufwand die gewünschte Überhitzung eingestellt werden kann. Die in den Separator eintauchende Wand kann in besonders einfacher Weise als Fuchs ausgebildet sein, wobei jedoch auch Ausbildungen ohne weiteres möglich sind, bei welchen der Einlaufteil und die Sammelkammer voneinander getrennt ausgebildet sind und lediglich durch einen Überströmkanal miteinander verbunden sind. Mit Vorteil kann hiebei die Ausbildung so getroffen sein, daß der Einlaufteil als gesonderte Kammer mit feuerfester Zustellung ausgebildet ist, daß die in den Separator eintauchende Wand von einer nahe dem Boden offenen Wand dieser Kammer gebildet ist und daß an diese bodennahe Öffnung eine Rinne, insbesondere eine einen Förderer aufweisende Rinne angeschlossen ist, welche den Einlaufteil mit der Sammelkammer für das Schmelzbad verbindet. Der Überlaufkanal kann somit als Rinne ausgebildet sein oder aber zur Verringerung der Bauhöhe einen Förderer aufweisen, so daß die Förderrinne auch schräg aufwärts verlaufen kann.

Um eine homogene Erwärmung des Schmelzbades vor dem Abstich bzw. dem Abfluß aus der Sammelkammer sicherzustellen, ist mit Vorteil die Ausbildung so getroffen, daß die Sammelkammer für das Schmelzbad einen Anschluß für eine Bodenspülung aufweist, wobei vorzugsweise der Anschluß für die Bodenspülung im Bereich einer induktiven Beheizung der Sammelkammer vorgesehen ist.

Um im Bereich der Schlacke die gewünschte Temperatur für die geforderte Schlackenkonsistenz besser einstellen zu können und andererseits den Verschleiß der feuerfesten Auskleidung im Bereich der aggressiven Schlacke möglichst gering zu halten, kann in besonders vorteilhafter Weise die Ausbildung so getroffen sein, daß der Einlaufteil über eine Höhe, welche im wesentlichen der Eintauchtiefe der Wand bzw. des Fuchses entspricht, eine Kühleinrichtung für die feuerfeste Ausmauerung aufweist. Gerade bei einer derartigen Ausbildung ist es besonders vorteilhaft, wenn in der nachfolgenden Sammelkammer für das Schmelzbad eine Überhitzung vorgenommen werden kann, und wie erfindungsgemäß gefordert, wenigstens ein Teil der Sammelkammer mit Heizeinrichtungen ausgestattet ist. Die Dimensionierung kann hiebei so getroffen sein, daß der Einlaufteil etwa 10 bis 50 % des Chargengewichtes fassen kann, wohingegen der beheizte Bereich der Sammelkammer etwa 10 bis 50 % des Chargengewichtes beinhalten kann. Auf diese Weise wird somit immer nur ein Teil des aus dem kontinuierlichen Schmelzverfahren abgezogenen Bades überhitzt und gleichzeitig ein hinreichender Pufferraum geschaffen, um ohne Unterbrechung des kontinuierlichen Schmelzverfahrens einen Pfannenwechsel durchführen zu können. Zum Pfannenwechsel kann hiebei das Sammelgefäß in einer Weise überdimensioniert werden, daß der während des Pfannenwechsels eintretende Teil der Schmelze im Sammelgefäß sicher aufgenommen werden kann. Alternativ kann vor einem Pfannenwechsel eine weitgehende Entleerung der Sammelkammer und des Einlaufteiles vorgenommen werden, um den geforderten Pufferraum für den Pfannenwechsel zur Verfügung zu stellen.

In besonders einfacher Weise kann die Fördereinrichtung bei Anordnung einer aufwärts verlaufenden Rinne zur Sammelkammer für das Schmelzbad als elektromagnetische Kletterrinne ausgebildet sein. Mit einer derartigen Einrichtung kann die Förderleistung kurzfristig verändert werden und es kann beispielsweise zur Erzielung eines Pufferraumes beim Pfannenwechsel die Förderleistung der elektromagnetischen Kletterrinne unmittelbar vor dem Pfannenwechsel kurzfristig erhöht werden, um im Einlaufteil das geforderte Puffervolumen zur Verfügung zu stellen.

Um lokale Erstarrungen im Einlaufteil bzw. im Ablaufbereich der Sammelkammer zu verhindern, kann die Ausbildung mit Vorteil so getroffen sein, daß im Einlaufteil oberhalb des Schlackenbades und/oder in der Sammelkammer nahe dem Ablauf für das Bad Brenner angeordnet sind.

Für den Pfannenwechsel kann es darüber hinaus vorteilhaft sein, den Ablauf für das Schmelzbad verschließbar auszubilden, wofür übliche Einrichtungen, beispielsweise ein Schieberverschluß, angeordnet sein können.

Um im Bereich der relativ kleinen Grenzfläche zwischen Bad und Schlacke übermäßige Kochreaktionen zu verhindern, ist mit Vorteil die Ausbildung so getroffen, daß in den Einlaufteil eine Einspulvorrichtung für Al-Draht mündet, wodurch eine Badberuhigung im Einlaufteil erzielt werden kann.

Die Erfindung wird nachfolgend an Hand von in der Zeichnung schematisch dargestellten Ausführungsbeispielen näher erläutert. In dieser zeigen: Fig.1 eine erste Ausführungsform einer erfindungsgemäßen Vorrichtung zum Trennen von Schlacke und Stahl bei kontinuierlichen Metallschmelzverfahren; Fig.2 eine abgewandelte Ausführungsform einer erfindungsgemäßen Vorrichtung, wobei der Einlaufteil von der Sammelkammer getrennt ist; Fig.3 eine weitere Ausführungsform der erfin dungsgemäßen Vorrichtung, bei welcher als Einlaufteil eine Auffangtasche vorgesehen ist, und Fig.4 eine abgewandelte Ausführungsform der erfindungsgemäßen Vorrichtung mit einem Syphonteil zwischen dem Einlaufteil und der Sammelkammer.

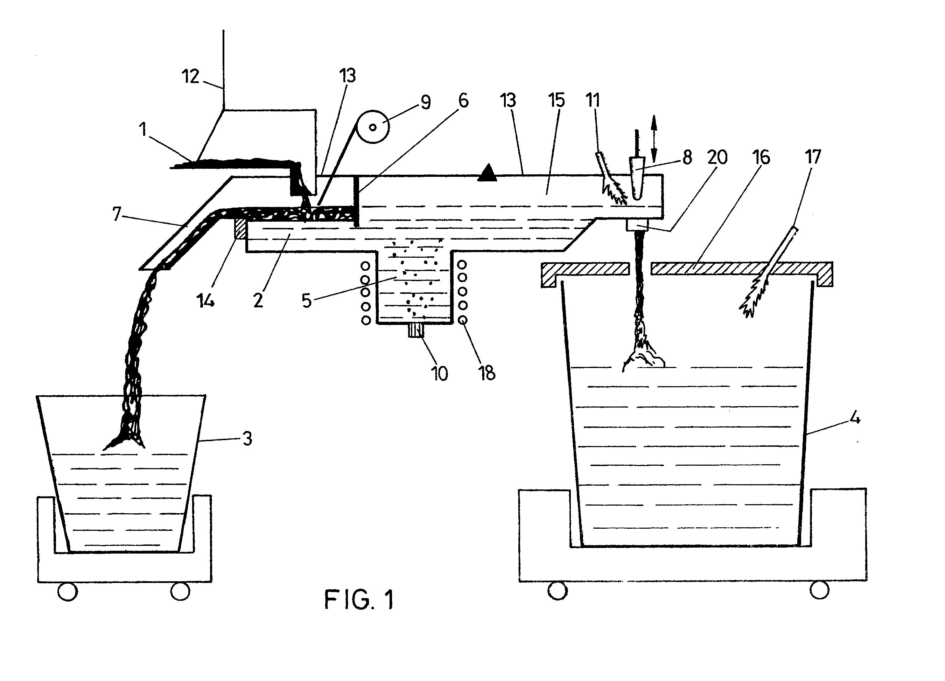

In der Ausführungsform gemäß Fig.1 ist mit 1 ein Stahl/Schlackegemisch bezeichnet, welches in den Auffangteil bzw. Einlaufteil 2 einfließt. In diesem Einlaufteil 2 des Separators wird das Metall/Schlackegemisch durch den Unterschied der Dichte getrennt und es fließt die Schlacke als Überlauf in einen Schlackenkübel 3 kontinuierlich ab. Weiters ist in Fig.1 eine Auffangpfanne 4 dargestellt, in welche das Stahlbad kontinuierlich abfließt. Der Separator der Ausbildung gemäß Fig.1 besteht neben dem Einlaufteil 2 aus einem Überhitzerteil 5, welcher vom Einlaufteil 2 durch einen Fuchs 6 abgeteilt ist. Durch den Fuchs 6 bzw. die in den Separator zwischen dem Einlaufteil 2 und dem Überhitzerteil 5 angeordnete Wand wird verhindert, daß Schlacke, welche über einen kontinuierlichen Schlackenabstich 7 in den Schlackenkübel 3 abgeleitet wird, in den Überhitzerteil 5 gerät. An den Überhitzerteil 5 des Separators schließt ein mit einem Stopfen 8 verschließbarer Abstichteil an. Um eventuelle Kochreaktionen Schlacke/Metall in dem relativ kleinen Auffangteil 2, wo nur eine kleine Berührungsfläche Schlacke/Metall vorliegt, verhindern zu können, ist eine Al-Drahteinspulanlage 9 vorgesehen, die mit vorwählbarer Geschwindigkeit kontinuierlich oder bei Bedarf Aluminiumdraht zur Beruhigung der Kochreaktion einspulen kann.

Im Überhitzerteil bzw. der Sammelkammer 5 ist eine Bodenspülung 10 vorgesehen, um eine genügend starke Badströmung, welche für eine gleichmäßige Wärmeverteilung wichtig ist, zu gewährleisten. Um im Bereich des Stopfenverschlusses 8 eine entsprechende Temperatur aufrechterhalten zu können, ist ein Brenner 11 vorgesehen.

Mit 12 ist in Fig.1 die getrennte Vorrichtung angedeutet, in welcher der kontinuierliche Schmelzprozeß, aus welchem der abfließende Metall/Schlackestrom 1 kontinuierlich abgezogen wird, durchgeführt wird. Der aus dem Einlaufteil 2 und dem Überhitzerteil 5 bestehende Separator wird durch einen Deckel 13 abgedeckt.

Um die Auskleidung des Einlaufteiles 2 des Separators vor übermäßigem Verschleiß zu bewahren und eine ordnungsgemäße Trennung der Schlacke vom Metallbad zu erzielen, ist mit 14 eine Kühlung des Feuerfest-Materiales der Schlackenzone einschließlich des Fuchses 6 angedeutet. Der gesamte Separator ist in Fig.1 mit 15 bezeichnet.

Wie aus Fig.1 weiters ersichtlich, weist die Auffangpfanne 4 einen Deckel 16 sowie einen Brenner 17 auf, wie dies schematisch angedeutet ist. Der Überhitzerteil 5 wird von einem schematisch mit 18 angedeuteten Induktionsofen beheizt. Die Leistung dieses Induktionsofens ist so bemessen, daß die maximal durchfließende Menge um 80 bis 100°C aufgeheizt werden kann.

Beim Wechsel der Auffangpfanne 4 wird, wenn die für die Weiterverarbeitung notwendige Menge eingefüllt ist, für einige Zeit mit dem Stopfen bzw. Schieber 8 der kontinuierliche Abstich geschlossen. Der Separator 15 ist so ausgelegt, daß der kontinuierliche Schmelzprozeß dabei nicht unterbrochen werden muß, da noch ein Reservevolumen für das kontinuierlich zulaufende Metall/Schlackegemisch besteht, bis der Schlackenüberlauf erreicht wird. Dieses Reservevolumen ist so ausgelegt, daß beispielsweise bei 60 t Reserve, bis zur Notwendigkeit des Wiederöffnens des Abstiches, vorhanden sind. Es ist außerdem von Vorteil, den kontinuierlichen Stahlabstich so vorzunehmen, daß zu Abstichbeginn sofort eine gewisse Menge, ca. 10% des Abstichgewichtes, an Stahl in die Auffangpfanne fließt, da dadurch die Gefahr von Schalen bildungen wesentlich vermindert wird. Während des kontinuierlichen Abstiches, bei dem nur eine kleine Badhöhe im Abstichteil vorhanden ist, wird mit dem Erdgas-Sauerstoffbrenner 11 zusätzlich die Oberfläche geheizt, um Verbärungen zu vermeiden.

Der gesamte Separator 15 ist mit einem ausgemauerten Deckel verschlossen, um Wärmeverluste durch Abstrahlung gering zu halten. Bis auf den gekühlten Schlackenbereich des Einlaufteiles ist der Separator 15 mit gut isolierenden Plättchen, hinter der Dauerzustellung, gegen Wärmeverluste, isoliert. Zum Reparieren bzw. zur Neuzustellung von Separatorteilen, einschließlich dem Induktionsteil, ist der gesamte Separator 15 heb- und senkbar, ausfahr- und kippbar. Wird der Schmelzprozeß für längere Zeit unterbrochen, so wird der Separator 15 ausgekippt und auf seinen Heizstand verfahren. Vor Wiederinbetriebnahme wird außerhalb in den Induktionsofen bzw. die Sammelkammer 5 Schrott chargiert und geschmolzen, wozu der aufklappbare Deckel 13 aufgeklappt wird, so daß der Induktionsofen bis in den Separator hinein mit flüssigem Stahl gefüllt ist. Die Öffnung unter dem Fuchs 6 wird mit einer Feuerfest-Platte verschlossen, die nach kurzer Zeit durchbricht und die erste Portion Metall/Schlakke aus dem Einlaufteil in den Überhitzerteil strömen läßt.

Durch diese Maßnahme wird das Eindringen von Schlacke in den Induktionsofenteil vermieden, und nach kurzer Zeit, wenn die untere Kante des Fuchses 6 erreicht ist, fließt keine Schlacke mehr aus dem Einlaufteil 2 in den übrigen Separator. Die Schlacke, die zu Beginn in den Überhitzerteil 3 des Separators 15 geflossen ist, wird mit reduzierenden Mitteln inaktiviert und abgesteift.

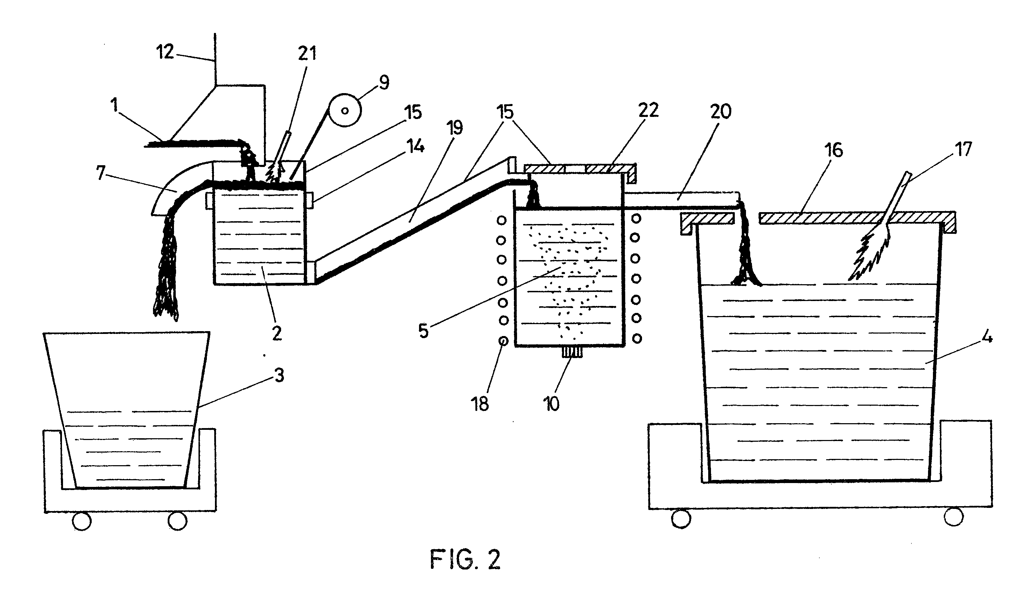

Eine zweite Ausführungsform für die Schlackentrennung und Überhitzung von Metall aus dem kontinuierlichen Schmelzprozeß wird in Fig.2 gezeigt, wobei für gleiche Bauteile die Bezugszeichen der Fig.1 beibehalten wurden.

Bei der Ausführungsform gemäß Fig.2 ist der Einlaufteil 2 als gesonderte Kammer ausgebildet und von der Sammelkammer 5, welche wiederum vom Induktionsofen 18 beheizt ist, getrennt. Anstelle des Fuchses 6 wird eine Seitenwand der getrennten Einlaufkammer 2 für die Trennung der Schlacke vom Metallbad vorgesehen. Zur Verbindung des Einlaufteiles 2 mit der Sammelkammer bzw. dem Überhitzerteil 5 ist eine elektromagnetische Kletterrinne 19 vorgesehen. Der Abfluß für das Metallbad des Überhitzerteiles ist mit 20 bezeichnet.

Der Einlaufteil 2 ist ein feuerfest zugestelltes, gedeckeltes Gefäß, dessen Feuerfest-Ausmauerung im Bereich der Schlackenzone gekühlt ist, um den Angriff des FeO der Schlacke auf die Zustellung gering zu halten. Über einen Überlauf 7 wird wiederum die aufschwimmende Schlacke kontinuierlich bei mengenmäßig in der Zeiteinheit gleicher Stahlerzeugung und Abtransport, beispielsweise über die Kletterrinne 19 in die Sammelkammer, in den Schlackenkübel 3 abfließen gelassen. Über ein Drahteinspulgerät 9 kann Al-Draht in den Einlaufteil eingespult werden, um unerwünschte Kochreaktionen im Einlaufteil einzudämmen. Ein Deckelbrenner 21 ist vorhanden, um, speziell zu Schmelzbeginn, das Gefäß und den Inhalt vorzuheizen. Der Einlaufteil kann 15 - 20 % des Chargengewichtes fassen. Der Füllgrad des Einlaufteiles wird durch Steuerung der über die Kletterrinne 19 geförderten Menge eingestellt.

Die elektromagnetische Kletterrinne 19 fördert das Metall vom Boden des Einlaufteiles 2 in einer Steigerung von 15° in den Induktorteil bzw. die Sammelkammer 5 des Separators 15. Mit ihr wird die Menge des geförderten Metalls auf das einfließende Metall/Schlackegemisch abgestimmt.

In den Induktor bzw. die Sammelkammer 5 des Separators 15 mündet der Auslauf der elektromagnetischen Kletterrinne 19. Der Induktor ist mit einem Deckel 22 zur Verminderung der Abstrahlverluste ausgestattet. Er besitzt radial gegenüber dem Einlaufteil der elektromagnetischen Kletterrinne 19 einen Rinnenabfluß 20, über den der Stahl in die Auffangpfanne 4 abfließt.

Der Induktor ist so ausgelegt, daß er 10 - 50 % des Chargengewichtes beinhaltet und bei der Leistung des Schmelzaggregates um 80 - 100° überhitzen kann.

Die Auffangpfanne, die zur Vermeidung von Abstrahlverlusten mit dem Deckel 16 mit Brenner 17 versehen ist, nimmt die für die Weiterverarbeitung des Metalls vorbestimmte Menge auf.

Um die Zeit eines Pfannenwechsels zu überbrükken, wird vor Beendigung des Abstichs über eine Mehrförderung von Stahl gegenüber der zulaufenden Stahlmenge der elektromagnetischen Kletterrinne 19, der Einlaufteil 2 des Separators 15 weitgehend geleert, so daß genügend Zeit verstreicht, bis wieder in den Überhitzerteil bzw. die Sammelkammer 5 gefördert werden muß, so daß in dieser Zwischenzeit ein Pfannenwechsel stattfinden kann. Es ist jedoch auch möglich, im Abfluß 20 einen verschließbaren Abstich anzuordnen, um während des Pfannenwechsels eine bestimmte Menge an Stahl puffern zu können, um so die Pfannenwechselzeit zu überbrücken. In diesem Fall besitzt der Überhitzerteil 5 im oberen Teil einen ungeheizten Abschnitt zur Pufferung. Die elektromagnetische Kletterrinne 19 ist in diesem Fall nicht mehr zur forcierten Abförderung von Stahl aus dem Einlaufteil 2, zur Möglichkeit der Pufferung, notwendig. Zudem ergibt sich der Vorteil, bei Abstichbeginn sofort eine gewisse Stahlmenge in die Auffangpfanne 4 laufen lassen zu können, was wiederum günstig gegen Schalenbildung in der Auffangpfanne 4 wirkt.

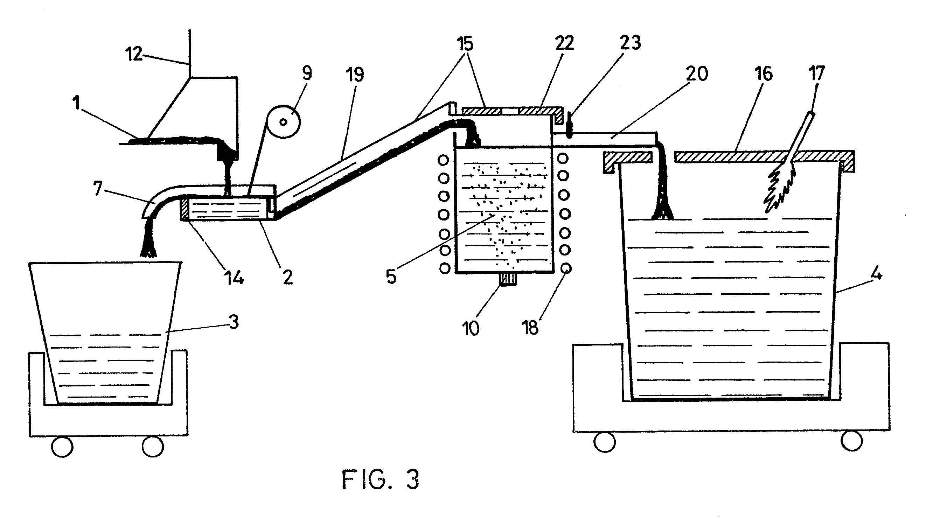

Bei der Ausführungsform gemäß Fig.3 ist wie bei Fig.2 der Einlaufteil 2 vom Überhitzerteil bzw. der Sammelkammer 5 getrennt ausgebildet, wobei in Fig.3 der Einlaufteil als ein das kontinuierlich ausfließende Metall/Schlackegemisch aufnehmende Auffangtasche ausgebildet ist, welche direkt an die elektromagnetische Kletterrinne 19 angeflanscht ist. Dieser als Auffangtasche ausgebildete Einlaufteil besitzt wiederum einen Schlackenüberlauf 7, über welchen die Schlacke, die von der elektromagnetischen Kletterrinne 19 nicht transportiert werden kann, kontinuierlich abläuft. Der Einlaufteil 2 ist im Bereich des Schlackenablaufes wiederum mit einer Kühlung 14 für die Ausmauerung ausgebildet, um den Schlackenangriff gering zu halten. Als in den Einlaufteil 2 eintauchende Wand ist wiederum ein Teil der den Einlaufteil 2 von der Kletterrinne 19 trennende Seitenwand vorgesehen.

Wie in den vorhergegangenen Ausführungsbeispielen ist eine Al-Drahteinspulmaschine 9 vorgesehen, mit der Al-Draht zur Beruhigung von Kochreaktionen in der Auffangtasche bzw. dem Einlaufteil 2 kontinuierlich oder bei Bedarf eingespult werden kann. Die elektromagnetische Kletterrinne 19 transportiert den nur schwach überhitzten Stahl mit einer Neigung von 15° kontinuierlich in den Überhitzerteil 5, der induktiv beheizt wird, und der mit der Inertgasspülung 10 zum Durchmischen des Stahls ausgerüstet ist. Vom Überhitzerteil 5, der so ausgelegt ist, daß das in der Zwischenzeit zufließende Metall um 80 - 100° überhitzt werden kann, fließt das überhitzte Metall kontinuierlich in eine gedeckelte, hoch vorgeheizte Auffangpfanne 4. Der Deckel 16 dieser Auffangpfanne ist wiederum mit einem Erdgas/Sauerstoffbrenner 17 versehen, so daß auch während des Füllens die Pfanne 4 beheizt werden kann.

Beim Pfannenwechsel, der nach Füllung der Auffangpfanne auf ein vorgegebenes Gewicht erfolgt, wird über einen Schieberverschluß 23 der kontinuierliche Ausfluß 20 in die Auffang pfanne 4 unterbrochen und während dieser Wechselzeit der zufließende Stahl im oberen Teil des Überhitzers 5 gepuffert. Das Puffervolumen ist so ausgelegt, daß bei vorgegebener Leistung ca. 5 min. kontinuierlich weiter Stahl über die Kletterrinne 19 in den Überhitzer 5 gefördert werden kann. In dieser Zeit erfolgt der Pfannenwechsel. Es ist für die Vermeidung von Schalenbildungen im Bodenbereich der Pfanne 4 günstig, wenn zu Beginn des kontinuierlichen Pfannenfüllvorganges eine gewisse Menge schlagartig zufließt, was mit der erfindungsgemäßen Konzeption gegeben ist.

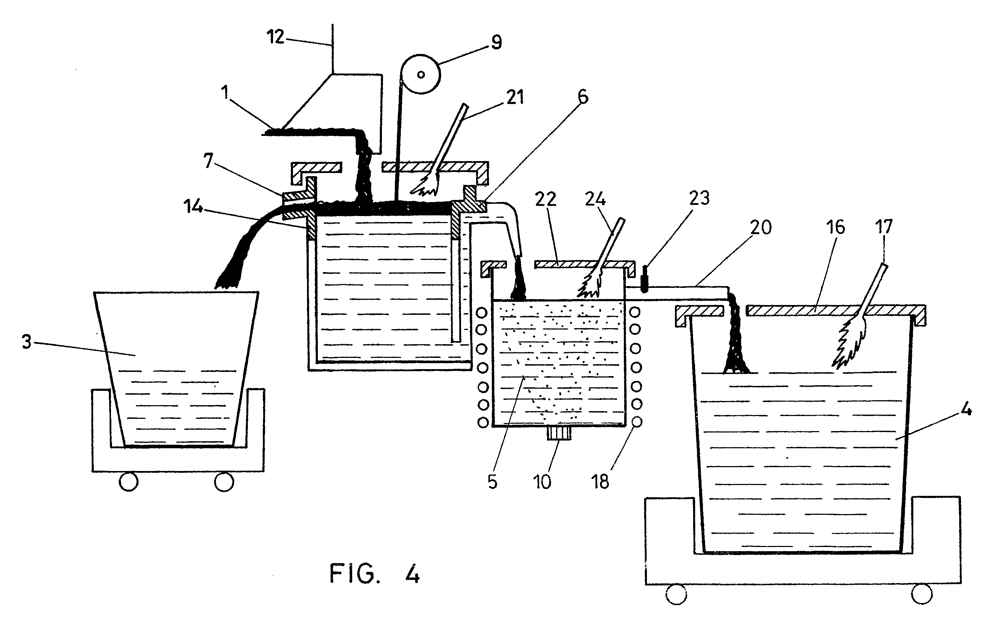

Bei der Ausführungsform gemäß Fig.4 sind für gleiche Bauteile wiederum die selben Bezugszeichen beibehalten worden. Bei dieser Ausführungsform ist der Einlaufteil 2 wiederum vom Überhitzerteil bzw. der Sammelkammer 5 getrennt ausgebildet und der Einlaufteil 2 weist wiederum einen Schlackenabfluß 7 auf, über welchen Schlacke kontinuierlich in eine Schlackenpfanne abfließt. Es ist wiederum die Kühlung 14 im Bereich der Schlackenzone zur Verhinderung eines übermäßigen Verschleißes der Ausmauerung des Einlaufteiles 2 in diesem Bereich angedeutet. Mit 6 ist wiederum ein in den Einlaufteil 2 hineinragender Fuchs bezeichnet, wobei dieser Fuchs als wassergekühlter Syphonteil ausgebildet ist, über welchen das Metallbad aus dem Einlaufteil 2 in den Überhitzerteil bzw. die Sammelkammer 5 mit den mit 18 angedeuteten Induktionsofen übergeleitet wird. Bei der Ausführungsform gemäß Fig.4 weist der Deckel 22 der Sammelkammer 5 einen Brenner 24 auf, ebenso wie im Deckel des Einlaufteiles 2 ein Brenner 21 vorgesehen ist. Zum Wechsel der Auffangpfanne 4 ist im Abfluß 20 der Sammelkammer 5 wie bei der vorhergehenden Ausbildung ein Schieberverschluß 23 vorgesehen.

Auch bei der in Fig.4 dargestellten Ausführungsform erfolgt in dem Überhitzerteil 5 eine Überhitzung des zufließenden Metalls um 80 - 100°C, wobei auch in diesem Falle eine Bodenspülung 10 mit Inertgas vorgesehen ist. Der Einlaufteil 2 und der Überhitzerteil 5 können dabei ein Volumen ähnlich der Ausführungsform gemäß Fig.2 aufweisen, um einen Tausch der Pfanne 4 durch Ausbildung eines ausreichenden Puffervolumens in geeigneter Weise zu ermöglichen.

**Patentansprüche**

1. Vorrichtung zum Trennen von Schlacke und Stahl bei kontinuierlichen Metallschmelzverfahren, dadurch gekennzeichnet, daß zwischen einer Auffangpfanne (4) und der Abstichöffnung des Schmelzgefäßes (12) ein vom Schmelzgefäß gesonderter Separator (15) angeordnet ist, dessen Einlaufteil (2) an die Abstichöffnung des Schmelzgefäßes (12) angeschlossen, insbesondere unterhalb der Abstichöffnung angeordnet ist, daß der Einlaufteil (2) durch eine in den Separator eintauchende Wand (6), insbesondere einen Fuchs, von einer Sammelkammer (5) für das Schmelzbad getrennt ist und einen Schlackenablauf (7) aufweist, daß die Unterkante der Wand (6) bzw. des Fuchses im Einlaufteil tiefer liegt als der Schlackenablauf (7) am Einlaufteil (2), daß die Sammelkammer (5) eine Abstichöffnung bzw. einen Abfluß (20) für das Schmelzbad aufweist und daß wenigstens ein Teil der Sammelkammer (5) mit Heizeinrichtungen (18) ausgestattet ist.

2. Vorrichtung nach Anspruch 1, dadurch gekennzeichnet, daß der Einlaufteil (2) als gesonderte Kammer mit feuerfester Zustellung ausgebildet ist, daß die in den Separator (15) eintauchende Wand (6) von einer nahe dem Boden offenen Wand dieser Kammer gebildet ist und daß an diese bodennahe Öffnung eine Rinne (19), insbesondere eine einen Förderer aufweisende Rinne angeschlossen ist, welche den Einlaufteil (2) mit der Sammelkammer (5) für das Schmelzbad verbindet.

3. Vorrichtung nach Anspruch 1 oder 2, dadurch gekennzeichnet, daß die Sammelkammer (5) für das Schmelzbad einen Anschluß (10) für eine Bodenspülung aufweist.

4. Vorrichtung nach Anspruch 1, 2 oder 3, dadurch gekennzeichnet, daß der Anschluß (10) für die Bodenspülung im Bereich einer induktiven Beheizung (18) der Sammelkammer vorgesehen ist.

5. Vorrichtung nach einem der Ansprüche 1 bis 4, dadurch gekennzeichnet, daß der Einlaufteil (2) über eine Höhe, welche im wesentlichen der Eintauchtiefe der Wand (6) bzw. des Fuchses entspricht, eine Kühleinrichtung (14) für die feuerfeste Ausmauerung aufweist.

6. Vorrichtung nach einem der Ansprüche 1 bis 5, dadurch gekennzeichnet, daß die Fördereinrichtung in der Rinne (19) zur Sammelkammer (5) für das Schmelzbad als elektromagnetische Kletterrinne ausgebildet ist.

7. Vorrichtung nach einem der Ansprüche 1 bis 6, dadurch gekennzeichnet, daß im Einlaufteil (2) oberhalb des Schlackenbades und/oder in der Sammelkammer (5) nahe dem Ablauf für das Bad Brenner (11,21) angeordnet sind.

8. Vorrichtung nach einem der Ansprüche 1 bis 7, dadurch gekennzeichnet, daß der Ablauf (20) für das Schmelzbad verschließbar ausgebildet ist.

9. Vorrichtung nach einem der Ansprüche 1 bis 8, dadurch gekennzeichnet, daß in den Einlaufteil (2) eine Einspulvorrichtung (9) für Al-Draht mündet.

FIG. 1

EP 0 349 523 A2

FIG. 2

FIG. 3

FIG. 4